# EUROPEAN PATENT APPLICATION

(11) **EP 1 455 071 A2**
(43) Date of publication of application: **08.09.2004**
(21) Application number: 04005160.9
(22) Date of filing: 04.03.2004
(51) Int. Cl.: F02D 41/02, F02D 41/06

(54) **Car start control apparatus**

(30) Priority: 04.03.2003 JP 2003056477
(71) Applicant: Hitachi, Ltd., Chiyoda-ku, Tokyo 101-8010 (JP)
(72) Inventor: Hori, Toshio, Chiyoda-ku Tokyo 100-8220 (JP)
(74) Representative: Beetz & Partner Patentanwälte

(57) **Abstract**

The present invention relates to an operation mechanism for adjusting engine output by a driver, an engine (301) for generating power for driving a car, a means for adjusting the engine output according to the operation state of the operation mechanism, a transfer means for transferring the engine output to a drive system, a clutch (302) for disengaging and engaging the power transfer of the transfer means, and a means for making the characteristic according to the operation state of the operation mechanism, which is a means for adjusting the engine output, different from those in other states not relating to car start. An internal combustion engine (301) having such a constitution can realize both prevention of an occurrence of a sense of incompatibility to an engine output adjustment intention of a driver and execution of good start behavior according to the clutch state at the start time.

## Description

### BACKGROUND OF THE INVENTION

The present invention relates to a car start control apparatus and more particularly to start control of a control apparatus having a clutch between an engine and a drive system.

Conventionally, as disclosed in Japanese Laid-open Patent Publication No. 2000-145832, a control apparatus, in a car start state, for instructing an engine control apparatus to decide and execute a desired engine speed is known.

Further, in Japanese Laid-open Patent Publication No. Hei 10-220266, an engine output control apparatus, when a neutral position of a manual transmission is released, for increasing engine output for car start and reducing the increased engine output according to a rise in the car speed is disclosed.

### SUMMARY OF THE INVENTION

In such a conventional control apparatus, however, an operation mechanism for adjusting engine output by a driver, typically a concept corresponding to an operation amount of an accelerator pedal is not provided and there is no description relating to an idea on a method for realizing compatibility of an output intention of the driver to the engine with good start behavior according to a clutch state at the start time.

The present invention was developed with the foregoing problems in view and is intended to realize both of prevention of an engine output adjustment intention of a driver from an occurrence of a sense of incompatibility and execution of good start behavior according to a clutch state at the start time.

To accomplish the above object, the car start control apparatus relating to the present invention can have an operation mechanism for adjusting engine output by a driver, an engine for generating power for driving a car, a means for adjusting the engine output according to the operation state of the operation mechanism, a transfer means for transferring the engine output to a drive system, a clutch for disengaging and engaging the power transfer of the transfer means, and/or a means for making the characteristic according to the operation state of the operation mechanism which can be a means for adjusting the engine output relating to start different from those in other states not relating to car start. By doing this, the present invention can realize both prevention of an occurrence of a sense of incompatibility to an engine output adjustment intention of a driver and execution of good start behavior according to the clutch state at the start time.

### BRIEF DESCRIPTION OF THE DRAWINGS

Fig. 1 is a block diagram of an internal combustion engine according to the present invention.
Fig. 2 is an internal block diagram of the control apparatus of the internal combustion engine shown in Fig. 1.
Fig. 3 is a car block diagram according to the present invention.
Fig. 4 is a drawing for explaining a concept of the control operation.
Fig. 5 is a drawing for explaining control of the engine.
Fig. 6 is a drawing for explaining characteristics according to the present invention.
Fig. 7 is a drawing for explaining a process according to the present invention.
Fig. 8 is a drawing for explaining an operation according to the present invention.
Fig. 9 is a drawing for explaining an example of the characteristic of the clutch.
Fig. 10 is a drawing for explaining characteristics according to the present invention.
Fig. 11 is a drawing for explaining a process according to the present invention.
Fig. 12 is a drawing for explaining characteristics according to the present invention.
Fig. 13 is a drawing for explaining an operation according to the present invention.
Fig. 14 is a drawing for explaining characteristics according to the present invention.
Fig. 15 is a drawing for explaining an operation according to the present invention.
Fig. 16 is a drawing for explaining a process according to the present invention.
Fig. 17 is a drawing for explaining an operation according to the present invention.
Fig. 18 is a drawing for explaining a process according to the present invention.
Fig. 19 is a drawing for explaining a process according to the present invention.

### DESCRIPTION OF THE PREFERRED EMBODIMENTS

The embodiments of the present invention will be explained below with reference to the accompanying drawings.

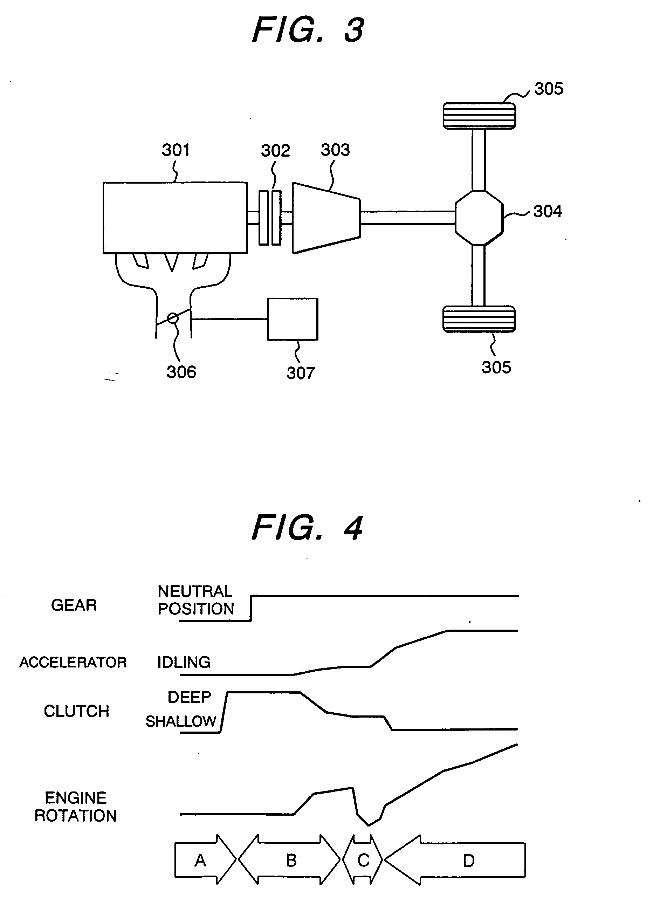

By referring to Fig. 3, firstly, the constitution of a car start control apparatus according to the present invention will be explained. Numeral 301 indicates an engine loaded in a car, which is a spark ignition type internal combustion engine, that is, an engine. Power which is output from the engine 301 is transferred to a transfer device and it is switched to transfer or not to transfer to a transmission 303 of a drive system by a clutch 302. Further, the clutch 302 will be explained, in this embodiment, by using the so-called manual transmission which is operated by a driver.

When the clutch is not engaged, the engine output is not transferred to the drive system and the power generated by the engine 301 is used to operate the number of revolutions of the engine. Namely, when the engine output is increased from the idling state of the engine, the number of revolutions of the engine is increased in correspondence to the increased output amount and enters a stationary state of a number of revolutions of the engine which is balanced with friction due to a frictional resistance of the engine and higher than that in the idling state.

When the clutch is engaged, the power is transferred to the transmission 303 for shifting, and then drive force is transferred to wheels 305 via a differential gear 304. The car is accelerated by drive force generated by the wheels 305. The transmission 303 fits the gear according to a shifting ratio decided by the operation of the driver and transfers the engine output to the down stream at a desired shifting ratio.

On the other hand, the engine 301 is provided with a throttle valve 306 for adjusting the amount of intake air and the throttle valve 306 is controlled in operation by a control apparatus 307.

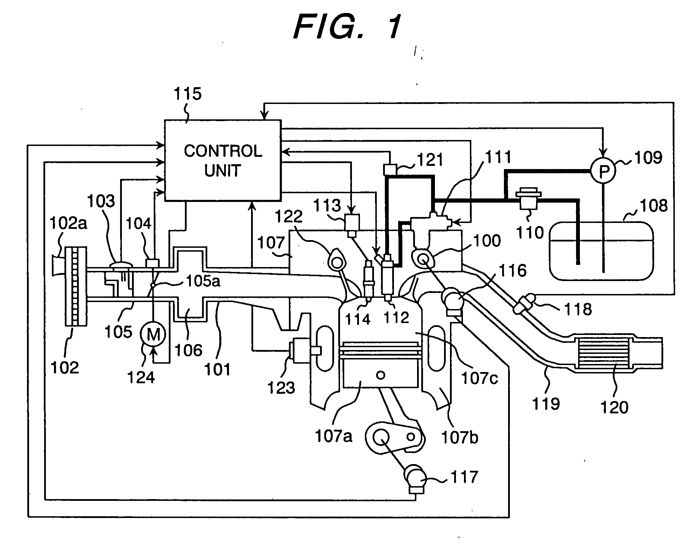

Fig. 1 shows an entire structure of the control system of the engine 301. Intake air introduced into a cylinder 107b is taken in from an inlet 102a of an air cleaner 102, passes an air flow meter (air flow sensor) 103 which is one operation state measuring means of the internal combustion engine, and enters a collector 106 through a throttle body 105 storing an electrically controlled throttle valve 105a for controlling the intake air flow rate. The throttle body 105 is equivalent to numeral 306 shown in Fig. 3. From the air flow sensor 103, a signal indicating the intake air flow rate is outputted to a control unit 115 which is an internal combustion engine control unit. The control unit 115 is equivalent to number 307 shown in Fig. 3.

Further, to the throttle body 105, a throttle sensor 104 which is one operation state measuring means of the internal combustion engine for detecting the opening of the electrically controlled throttle valve 105a is attached and a signal thereof is also outputted to the control unit 115.

Air sucked in the collector 106 is distributed to air intake pipes 101 connected to the cylinders 107b of an internal combustion engine 107 and then introduced into combustion chambers 107c of the cylinders 107b.

On the other hand, fuel such as gasoline is primarily pressurized by a fuel pump 109 from a fuel tank 108, is controlled to a fixed pressure by a fuel pressure regulator 110, then secondarily pressurized to a higher pressure by a high pressure fuel pump 111, and pumped to the common rail.

The aforementioned high-pressure fuel is injected from injectors 112 respectively installed in the cylinders 107b into the combustion chambers 107c. The fuel injected into the combustion chambers 107c is ignited by an ignition plug 114 by an ignition signal controlled to a high voltage by an ignition coil 113.

Further, a cam angle sensor 116 attached to the cam shaft of the exhaust valve outputs a signal for detecting the phase of the cam shaft to the control unit 115. In this case, the cam angle sensor may be attached to the cam shaft on the air intake valve side. Further, a crank angle sensor 117 for detecting the rotation and phase of the crank shaft of the internal combustion engine is installed on the crank shaft to input the output thereof to the control unit 115.

Furthermore, an air-fuel ratio sensor 118 installed on the upstream side of a catalyst 120 in an exhaust pipe 119 detects exhaust gas and a detection signal thereof is outputted to the control unit 115.

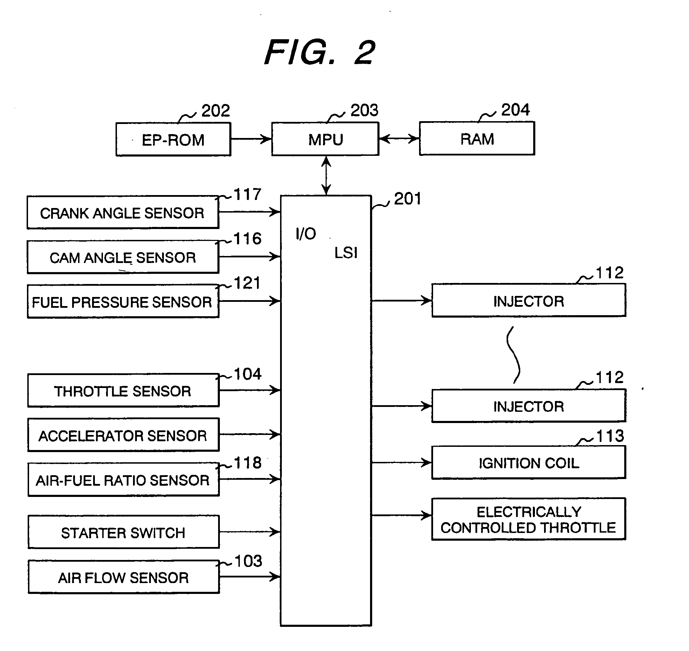

The important part of the control unit 115, as shown in Fig. 2, is composed of an MPU 203, a ROM 202, a RAM 204, and an I/O LSI 201 including an A-D converter, takes in signals from the air flow sensor 103 which is one means for measuring (detecting) the operation state of the internal combustion engine and from various sensors including a fuel pressure sensor 121 as input, executes a predetermined operation process, outputs various control signals calculated as an operation result, supplies a predetermined control signal to the injectors 112 and the ignition coil 113, and executes fuel supply amount control and ignition time control.

In such a control unit, the ratio of the air amount to be sucked in by the engine to the fuel amount to be supplied greatly affects the efficiency of converting the components in exhaust gas by the catalyst 120, so that both air and fuel are often controlled theoretically by the theoretical air to fuel ratio to be supplied to fuel just enough. Therefore, the output generated by the engine can be adjusted by adjusting the intake air amount.

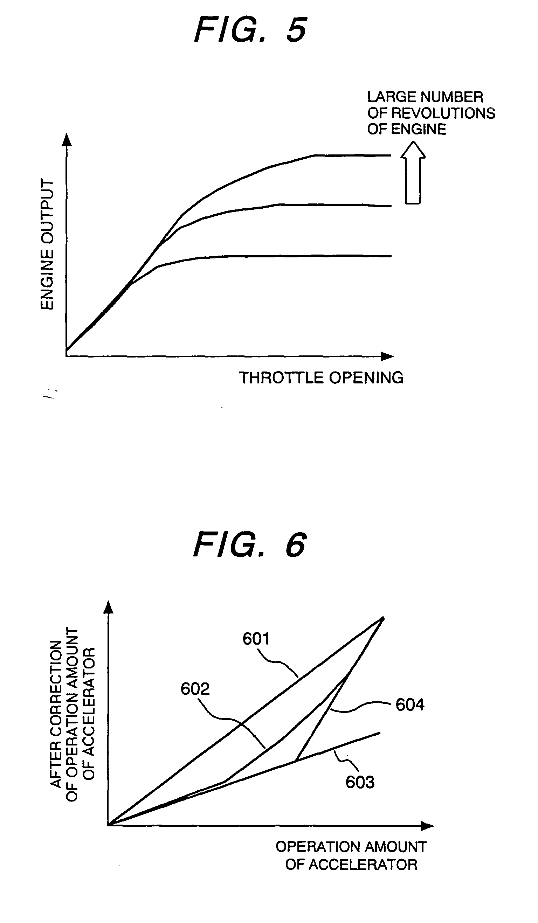

Fig. 5 is a drawing showing the relationship between the opening of the throttle valve and the output generated by the engine. As shown by the arrow in the drawing, as the number of revolutions of the engine increases, the maximum output which can be realized increases. The reason is that in the neighborhood of the maximum output, the air amount which can be sucked in by the engine is almost equal to the product of the stroke volume of the engine and the number of revolutions of the engine.

On the other hand, the reason is that in the area where the throttle opening is small, the air amount that the flow rate is limited by the throttle valve is sufficiently smaller than the air amount which can be sucked in by the engine, so that the intake air amount is decided almost in proportion to the opening area of the throttle valve and the opening area of the throttle valve is almost proportional to the throttle opening.

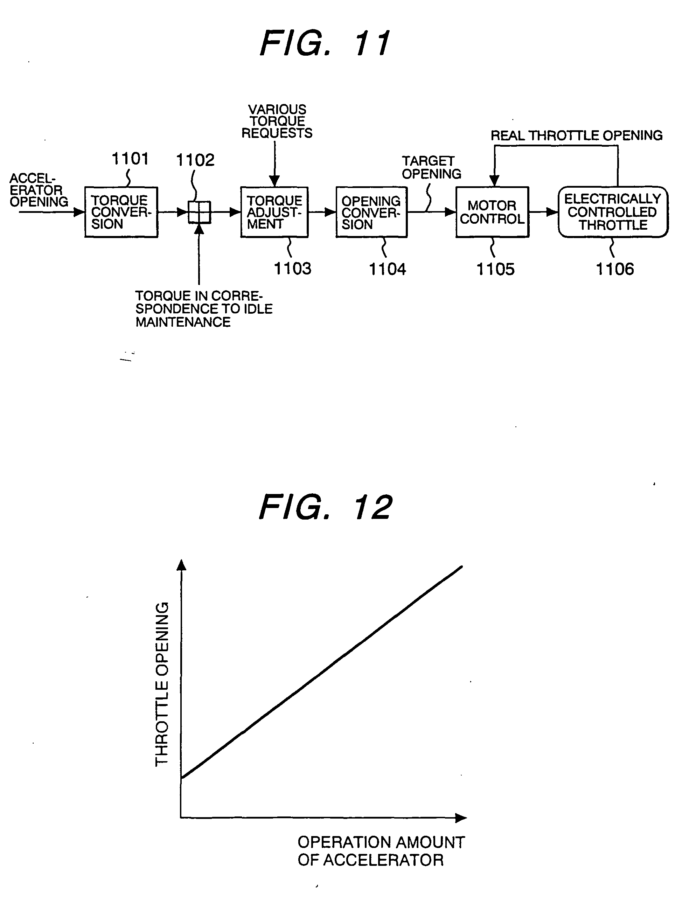

Therefore, when a driver operates the throttle opening according to the operation amount of the accelerator to be operated by him, the output of the engine can be adjusted. An example of the control is shown in Fig. 11. The operation amount of the accelerator is electrically converted and inputted to the control unit as an accelerator opening. The accelerator opening, at a block 1101, is converted to the target value of the engine torque which is intended by the driver and moreover, at a block 1102, the target value is added to the required torque value for maintaining the idling state of the engine. On the other hand, adjustment of the target torque for corresponding to a request for operating the torque in addition to the intention of the driver from the operation state of the car, for example, a request for keeping the car speed constant from the fixed speed moving apparatus is executed at a block 1103 and the throttle opening for realizing the required target torque is operated at a block 1104. A block 1105 executes motor control for realizing the target throttle opening by an electrically controlled throttle 1106 and outputs a control signal of the electrically controlled throttle 1106. To obtain the target throttle opening quickly and accurately, the block 1105 inputs the real throttle opening of the electrically controlled throttle 1106 and executes feedback control accompanying it.

As understood from the above explanation, the throttle opening operation amount and the basic accelerator operation amount have a one-to-one correspondence between them to prevent the driver from a sense of incompatibility to the engine output. Furthermore, there is a kind of engine constitution available that it has no electrically controlled throttle, and the accelerator and throttle valve are mechanically engaged, and the throttle valve is opened almost in proportion to the accelerator operation amount. To prevent a sense of incompatibility to the engine apparatus having this constitution and the accelerator operation amount vs. engine output characteristic, the characteristic of the engine apparatus using the electrically controlled throttle, as shown in Fig. 12, is generally set proportionally.

A typical operation state of such an apparatus at the time of car start is shown in Fig. 4. In Fig. 4, the time passes from the left to the right. Firstly, a driver steps on the clutch in a full stroke so as to make the transmission free from the engine and switches the gear position from the neutral position to a position suitable for start. At this time, the accelerator is in the idling state, that is, in the state that it is not operated or not stepped on. Therefore, the number of revolutions of the engine is in an almost fixed state of idling. The period before execution of this series of operations is assumed as a state A as shown by the arrow in the drawing.

Then, for start, the driver slightly steps on the accelerator, adjusts so as to obtain sufficient engine output to the coming clutch engagement, and moreover, returns the clutch comparatively quickly to this side of the engagement position of the clutch. At this time, the number of revolutions of the engine increases more than the number of idle revolutions because the throttle valve is operated so as to be opened by operating the accelerator. The period during execution of this series of operations is assumed as a state B as shown by the arrow in the drawing.

Next, when the clutch engagement is started to return the clutch in the shallow direction, the load for start is begun to be applied to the engine and the number of revolutions is reduced. The driver detects it, finely operates the clutch and accelerator, and generates drive force by avoiding an engine failure due to an excessive load applied to the engine to start. Soon, the clutch enters the perfect engagement state.

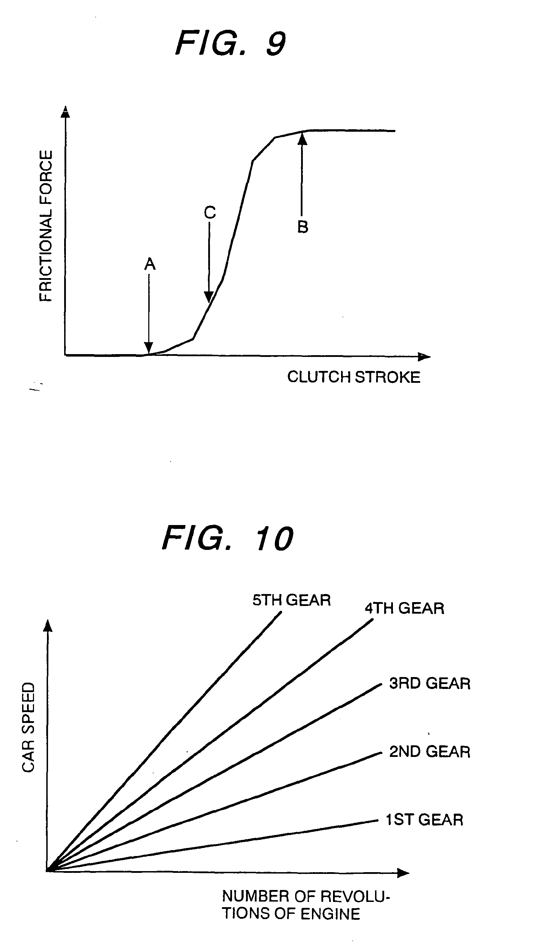

Next, the clutch engagement state will be explained by referring to Fig. 9. The axis of abscissa indicates a stroke of the clutch which is proportional to the stroke of the clutch pedal and the axis of ordinate indicates frictional force between the input and output shafts. The left of the axis of abscissa indicates a state that the clutch pedal is stepped on, and the frictional force is 0, and the engine and drive system are in the open state. The right of the axis of abscissa is a side where the clutch pedal is opened the frictional force is maximized. The frictional force is larger than the force for driving the car and the engine and drive system are in the perfect engagement state. When the clutch stroke moves from the open state to the engagement state, the clutch plate begins contact at the point A shown in the drawing and when frictional force is generated, the power begins to transfer from the engine to the drive system. From the point A to the point B, the clutch is not in the perfect engagement state and the clutch plate is different in the number of revolutions between the input side and the output side due to the frictional force. Namely, the clutch plate is in a sliding state.

The period during execution of this series of operations is assumed as a state C as shown by the arrow in the drawing. In the state C, the clutch plate is in a sliding state.

Thereafter, the driver judges that the clutch engagement is completed, perfectly disengages the clutch pedal, and moreover, operates the accelerator until he obtains the acceleration state which is originally intended by him. This state is a state that the start is finished and the car moves to a driving state and it is assumed as a state D as shown by the arrow in the drawing.

In such a series of strokes of start, the driver, as mentioned above, is required for a fine operation for the accelerator and clutch. Therefore, to simplify the start operation, the conditions of assisting a driver in each state will be explained below.

In the state A, the driver does not require a specially fine operation and no assist is particularly necessary for the driver.

In the state B, the driver increases the number of revolutions of the engine by his own intention. However, this operation, as mentioned previously, is performed to avoid an engine failure in correspondence to an increase in the load to the engine due to the coming clutch engagement and to lead to the output state of the engine considered by the driver on the basis of the experience of the driver and the state of the'car. Accordingly, the driver, by listening to the engine sound or confirming by the meter, intends to lead the number of revolutions of the engine within a considered range. When the engine output is high for the accelerator operation of the driver, dissatisfaction with a large number of revolutions is caused, and when the engine output is low, the engine does not respond to, and when he feels uneasy about an engine failure, dissatisfaction is caused. Therefore, the conditions are that the engine output state is higher than that in the idling state and the engine output state along the intention of the driver can be easily obtained.

In the state C, the driver operates the accelerator and also the clutch so as to avoid sudden clutch engagement causing an engine failure and shortage of the operation amount of the accelerator and to avoid high engine output overcoming the load of clutch engagement and suddenly accelerating the car. Therefore, the conditions are that the engine output state along the intention of the driver can be easily obtained and an engine failure is avoided.

In the state D, the start is finished, so that there is no special request concerning start. However, by the assistance control at the start time, a sense of incompatibility must not be given to the driver.

From the above conditions in the respective states, the correspondence of the control in the state B will be explained firstly. The engine output sensitivity for the operation amount of the accelerator has the characteristic explained in Fig. 5. Here, when it is attempted to prevent the throttle valve from resistance to air intake until a large number of revolutions of the engine and a high load are obtained, the largest opening area of the throttle valve must be large. If such a measure is taken, the opening area for a predetermined operation amount of the throttle valve is varied greatly, thus the intake air amount is also varied greatly, so that the engine output is also varied greatly. It requires the driver for a fine value of accelerator operation amount in order to operate the engine within a desired range of the number of revolutions of the engine. In such a case, as shown in Fig. 6, when the operation amount of the accelerator is corrected as a characteristic 602 shown in the drawing so as to reduce the operation amount of the accelerator more than a general accelerator operation amount characteristic 601 in a case of a low accelerator operation amount, in the state B that the engine is in the no-load state, the driver can easily adjust the operation amount of the accelerator for operating the engine within a desired range of the number of revolutions of the engine. Further, a characteristic like a characteristic 603 shown in the drawing is also effective in this object.

On the other hand, in the state B, the driver does not always perform the clutch engagement operation and for example, for racing, a case of maximizing the operation amount of the accelerator is conceivable. In such a case, in the characteristic 603, the throttle cannot be opened totally. To obtain a totally-opened state of the throttle in this case, like a characteristic 604, on the side of a larger operation amount of the accelerator than the range mainly used for clutch engagement following the characteristic 603, a characteristic for requiring a totally-opened accelerator by a maximum operation amount of the accelerator is acceptable. Further, in the characteristic 602, the throttle can be opened totally. Which one is to be selected, the characteristic 602, 603, or 604 may be decided by the sense of each engine output characteristic. Further, such an operation may be performed at the block 1101 shown in Fig. 11.

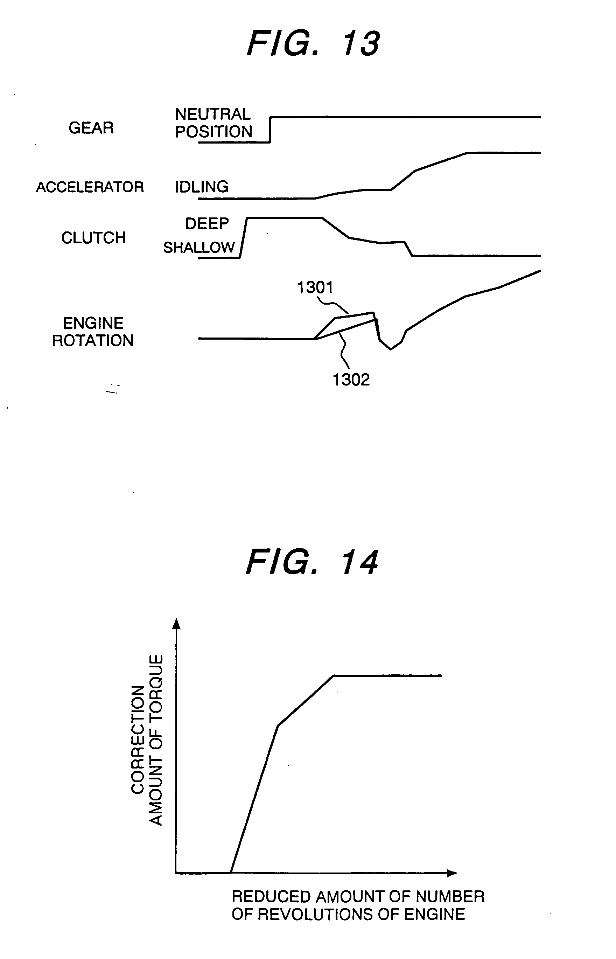

With respect to a case of performing the operation explained above and a case of not performing it, the behavior at the start time is shown in Fig. 13. The accelerator operation behavior performed by the driver for start is a comparison between the behaviors at the same number of revolutions in both cases. When the operation is not performed, the behavior of the number of revolutions of the engine is a one indicated by numeral 1301 and it is the same as the behavior of the number of revolutions shown in Fig. 4. On the other hand, when the operation is performed, the behavior of the number of revolutions is a one indicated by numeral 1302. As mentioned previously, originally for the driver, when the engine output necessary for clutch engagement is obtained, a small number of revolutions of the engine is desirable. However, since the adjustment of the operation amount of the accelerator is fine, the number of revolutions of the engine is large for the characteristic 1301, while for the characteristic 1302, no engine failure is caused and the number of revolutions of the engine can be controlled to smaller than that of the characteristic 1301. The reason is that the driver improves the precision for operating within a desired range of the number of revolutions of the engine and the performance improvement is owing to that, as explained in Fig. 6, the engine output amount for the operation amount of the accelerator is reduced, thus the accelerator can be operated easily.

Next, the correspondence of the control in the state C will be explained. Particularly in the first half of the state C, the clutch engagement is not sufficient and the driver is required to perform a fine accelerator operation continuously to the state B. Therefore, the characteristic of the engine output for the operation amount of the accelerator is desirably the same as the characteristic obtained in the state B. Further, in the latter half of the state C, drive force is generated for the car and the driver desires quick engine output for the operation amount of the accelerator. This state is close to the general driving state and the characteristic 601 shown in Fig. 6 becomes a characteristic for realizing the driver's desire.

Furthermore, in the state C, when an operation of suddenly engaging the clutch and suddenly applying a load of driving force necessary for start to the engine is performed, the engine cannot overcome the load, and the number of revolutions is reduced, and worst of all, an engine failure is caused. To avoid such a situation, when the clutch engagement load is large, the output torque of the engine may be increased to prevent the engine from occurrence of a failure and reduction in the number of revolutions. Concretely, when the number of revolutions of the engine is reduced, the output torque may be increased. Fig. 14 shows an example of setting of the torque correction amount. When the reduction amount of the number of revolutions of the engine is minute, it is not fatal to the start stroke, so that the torque is not corrected. When the reduction amount of the number of revolutions of the engine becomes larger than a predetermined value, a value of compensating for the reduction amount and of giving no sense of incompatibility to the driver to which the engine output torque is corrected is issued as a torque instruction value. For the reduction of the number of revolutions of the engine larger than the predetermined value, a correction value is set so as not to exceed a value which can be realized by the engine. Further, the reduction amount of the number of revolutions of the engine, when it is calculated under the condition that the actual number of revolutions of the engine is smaller than the target number of revolutions at the time of idling, is acceptable because the number of revolutions of the engine can follow the target number of revolutions at the time of idling which is varied under various conditions. The operation explained above may be performed at the block 1101 shown in Fig. 11 or an equivalent correction amount may be compensated for the idle maintaining torque shown in Fig. 11.

Then, in the state D, since the clutch engagement is finished perfectly, the control apparatus belongs to the category of the general driving state and the same operation amount of the accelerator and output characteristic of the engine as those of the latter half of the state C are desirable.

As explained above, the engine output characteristic for the operation amount of the accelerator is desirable respectively in the states B, C, and D. A method for changing the characteristic according to the respective states will be explained below.

Firstly, the state B relates to start when a car begins to move. Namely, since it is desired to detect a state that the car can start, the conditions may be considered that the speed of the car is 0, and the gear is not in the neutral position, and more in detail, the gear ratio for start is low, and the clutch is in the disengaging position, and the clutch pedal is typically stepped on in a full stroke. These conditions, from the kind of a signal inputted to the control unit for control, may be selected and set necessarily and sufficiently. Concretely, when the signals of the aforementioned conditions are all input to the control unit and the conditions are all effective, it may be decided that the state is moved to the state B. Further, when the driver stops start, any of the aforementioned conditions becomes ineffective, so that it may be decided that the state B is moved to a state other than the state C.

Next, the state C is moved only from the state B. A method for knowing movement to the state C most briefly is to know that when the clutch engagement starts, the drive force is transferred to the car, and when the car begins to start, the speed of the car is changed to other than 0.

Further, when the stroke of the clutch can be detected, the clutch stroke at which the clutch begins engagement is stored beforehand, and it is detected that the clutch is returned to this stroke, whereby it can be known that the state is moved to the state C.

However, there is a case that a car is driven on an upward slope and even if the drive force is transferred, the car speed is 0. Further, when the engagement start position is shifted for the clutch stroke depending on the condition, the aforementioned method causes a great detection error. In this case, the method explained below enables more precise detection of the clutch engagement start.

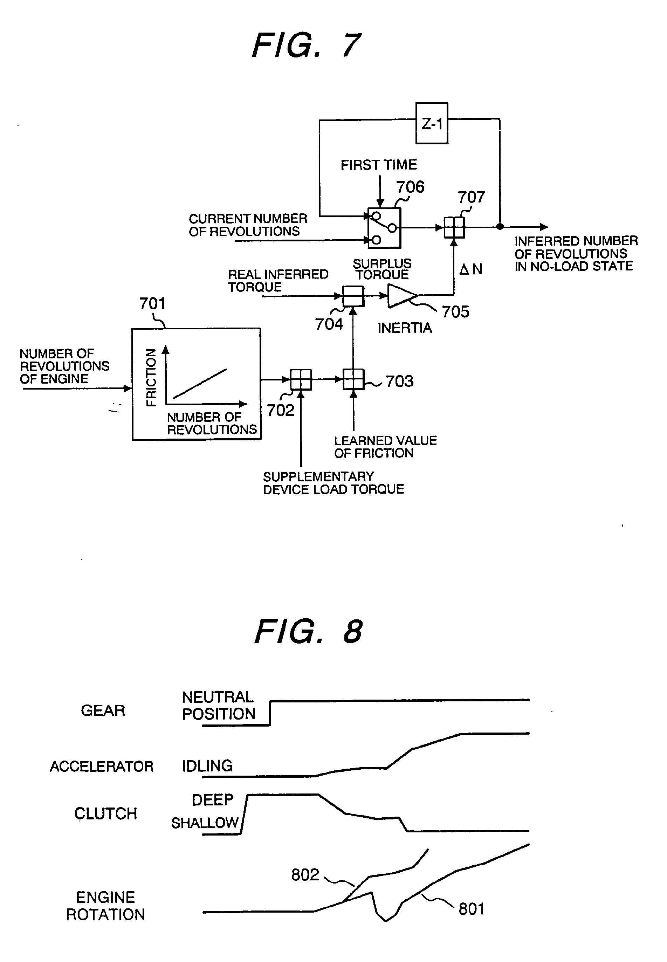

Fig. 7 shows an example of the operation of inferring the behavior of the number of revolutions of the engine when the engine is in the no-load state. When the actual number of revolutions is compared with this inferred number of revolutions, the actual number of revolutions of the engine when a load is applied to the engine is smaller than the inferred number of revolutions of the engine, so that if the load can be limited to clutch engagement, the clutch engagement start can be known.

A block 701 shown in Fig. 7 is a function for obtaining necessary torque to maintain the rotation of the engine and when the engine generates this torque, if the engine is in the no-load state, it is a value capable of maintaining the number of revolutions thereof. This is referred to as friction torque. The friction torque mainly includes sliding friction of the engine, compression loss, and intake resistance and its value can be known almost by the number of revolutions of the engine. Therefore, in the block 701, the value is obtained from the number of revolutions of the engine by table retrieval.

Next, an operation 702 adds torque necessary to drive a supplementary device load. The supplementary device means a device operating using the engine as a power source and it is, for example, a compressor of an air conditioner, an alternator, or a power steering oil pump. These supplementary devices are operated with the power supplied from the engine depending on the respective operation states, so that the engine must supply power corresponding to the states. These necessary powers are properly inferred by input necessary to know the required values and calculated as supplementary device load torque. An example is for a compressor of an air conditioner, a pressure difference of a cooling medium between the upstream and the downstream of the compressor, for an alternator, a drive signal of a regulator, or for power steering, a discharge pressure of an oil pump.

The torque explained above is a one which is not outputted among the torque generated by combustion of the engine. However, to more improve the precision, an operation 703 adds a friction learned value according to each individual state. With respect to a learning method, for example, in the idling state, the engine output and the number of revolutions of the engine are in the balanced state and at this time, the engine output torque can be inferred from the fuel injection amount, intake air amount, and ignition time. Therefore, a difference between a value calculated as friction torque or supplementary device load torque and an inferred value of engine output torque can be learned as a learned value, and the friction torque is corrected by the learned value, thus the engine torque which is not outputted can be obtained more accurately.

Further, not only in the idling state but also in the car driving state, if the car driving load can be known accurately, the engine torque which is not outputted can be obtained from the driving load, car acceleration state, car inertia, and inferred value of engine output. The conceivable breakdown of the driving load is a road surface resistance, an air resistance, a road surface slope, a steering resistance, and braking by a brake.

A difference between the obtained engine torque which is not outputted and an inferred value of the combustion torque generated by the engine is obtained by an operation 704. The result is torque which is generated as output from the engine and it is here referred to as surplus torque. The surplus torque can have both positive and negative values. When the surplus torque is positive and the engine is in the no-load state, it is supplied to accelerate the single engine and results in functioning to raise the number of revolutions of the engine. When the surplus torque is negative and the engine is in the no-load state, it is supplied to decelerate the engine and results in functioning to reduce the number of revolutions of the engine. Therefore, when the surplus torque is multiplied by a reciprocal number of the moment of inertia of the engine, the rotational acceleration of the engine can be obtained. The operation is performed by an operation 705 shown in Fig. 5.

When the rotational acceleration obtained above is added to the reference number of revolutions of the engine every a predetermined time, the number of revolutions of the engine in the no-load state can be inferred from the inferred real torque of the engine. This operation is performed by an operation 707 shown in Fig. 7. For the reference number of revolutions of the engine, as shown in an operation 706 in Fig. 7, it is desirable to use the first real number of revolutions of the engine for this inference operation. As concrete activation start conditions of this operation, the timing of moving to the state B and the timing of start of the accelerator operation in the state B may be considered. If there is a method for detecting the idling state and non-idling state available as a detection method for start of the accelerator operation, it is desirable to use it.

An example of the behavior of the inferred number of revolutions of the engine in the no-load state which is obtained by such a method is shown in Fig. 8. In the drawing, numeral 801 indicates the real number of revolutions of the engine and 802 indicates the inferred number of revolutions of the engine in the no-load state. The characteristics 801 and 802 are well consistent with each other when the engine is in the no-load state, though when the clutch is started to be engaged, they are separated from each other and the real number of revolutions of the engine becomes lower than the inferred number of revolutions of the engine. The reason is that a load begins to be applied to the engine and the number of revolutions of the engine is not increased. From this separation, the start of clutch engagement can be known. Therefore, the movement from the state B to the state C can be detected.

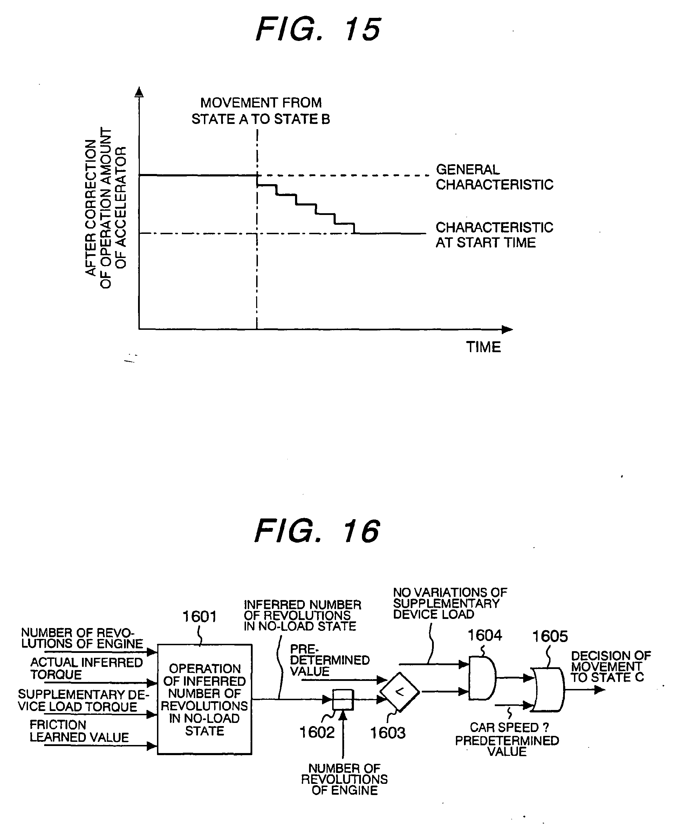

A concrete example of the control for detecting the aforementioned movement from the state B to the state C will be shown in Fig. 16. A block 1601 shown in the drawing is the operation explained in Fig. 7 and it outputs the inferred number of revolutions of the engine in the no-load state. Next, an operation 1602 subtracts the real number of revolutions of the engine from the inferred value and when the difference is larger than a predetermined value, an operation 1603 decides it as true. Further, with respect to the inferred number of revolutions of the engine obtained by the block 1601, when any disturbance is caused in the driving state, there is the possibility that the inference accuracy may be reduced. In such a case, as shown in an operation 1604, when a disturbance is caused, when a process of not deciding movement from the state B to the state C is performed, a mal-decision can be prevented. Whether the supplementary device load is varied or not is monitored and only when there are no variations, the aforementioned decision is made effective. Furthermore, at any of the timings, so as to detect movement to the state C, an operation 1605 can decide movement to the state C because the car speed exceeds a predetermined value.

Further, when the aforementioned clutch stroke is detected, the actual clutch engagement start position due to various variations is learned by the aforementioned method and more accurate clutch engagement start can be known. Namely, it is a method for storing and learning the clutch stroke as a clutch stroke at the time of clutch engagement start at the timing detected by the aforementioned detection method for clutch engagement start.

According to this method, for example, when a car speed sensor fails and the inferred number of revolutions of the engine in the no-load state cannot be calculated for some reason or even when the reliability is low, the pre-stored clutch stroke for clutch engagement start is detected, thus the clutch engagement start can be detected.

According to the method explained above, without using a sensor for clutch engagement detection such as a torque sensor, the timing of clutch engagement start can be detected.

Next, the movement from the state C to the state D can be known by a method which will be explained below.

A simplest method is a method for empirically inferring the completion of clutch engagement because the car speed exceeds a predetermined value. A driver empirically judges the completion of start when the car speed exceeds the predetermined value and at this time, the driver disengages the clutch pedal. This method judges the completion of clutch engagement when the car speed exceeds the predetermined value.

Further, when the clutch stroke is to be detected, more directly when the clutch is returned by more than a predetermined stroke, the completion of clutch engagement can be detected.

Furthermore, using that when the clutch is in the engagement state, it does not slip, the clutch engagement can be known by a method which will be explained below.

Fig. 10 shows the relationship between the car speed and the number of revolutions of the engine when the clutch is in the engagement state. The shifting gear ratio is fixed at each gear position, and the clutch is in the engagement state, so that the car speed and the number of revolutions of the engine are proportional to each other as shown in the drawing, and the slope thereof is decided by the gear ratio. Therefore, when the ratio of the car speed to the number of revolutions of the engine is calculated and the value is almost consistent with any of the gear ratios, it can be judged that the clutch is in the engagement state. When the ratio of the car speed to the number of revolutions of the engine is other than the value, it can be judged that the clutch is not in the engagement state.

By the method explained above, the movement to the state A, B, C, or D can be detected. Next, at the time of movement to each state, a method for calculating the characteristic for the operation amount of the accelerator explained in Fig. 6 will be explained below.

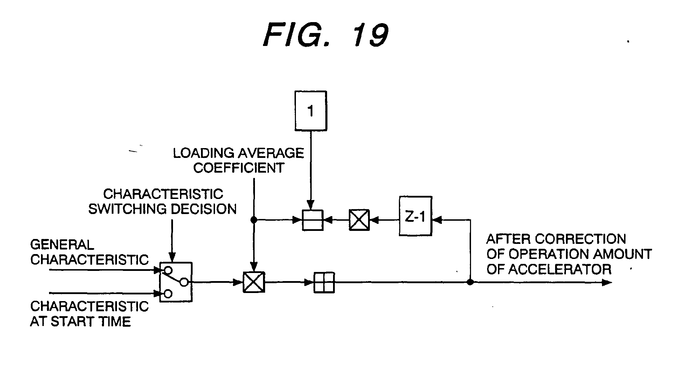

Firstly, at the time of movement from the state A to the state B, the general characteristic is switched to the characteristic which is not sensitive to the operation amount of the accelerator. In this movement, a driver is not particularly required to operate the accelerator and in all cases, no accelerator operation is performed. In this case, no special process is required and it is desirable to simply switch the aforementioned characteristic. However, when it is assumed that a driver performs the accelerator operation, disengages the clutch in this state, and shifts the gear position, if he simply executes the aforementioned switching, the operation amount to engine output for the operation amount of the accelerator is suddenly changed and there is the possibility of giving a sense of incompatibility to the driver. In this case, as shown in Fig. 15, to prevent the driver from a sense of incompatibility, it is desirable to slowly move between two characteristics. In this example, the characteristic changing amount from the movement source, that is, the general characteristic to the movement destination, that is, the characteristic at the start time during a predetermined time is restricted to less than a predetermined value. The restriction is activated at the timing of movement from the state A to the state B and is continued until the characteristic at the movement source coincides with the characteristic at the movement destination. This operation is performed even if the driver performs the accelerator operation during the period. Further, as another method, there is a method for performing a loading average for the present value available. An example thereof is shown in Fig. 19. A value after characteristic selection is multiplied by a predetermined loading average coefficient, and on the other hand, the last operation result is multiplied by a value obtained by subtracting the aforementioned loading average coefficient from 1, and the two are added, thus the corrected operation amount of the accelerator is obtained. This operation shows a characteristic responding to a final target value with a predetermined delay and it is one method suited to the operation object.

When such an operation is performed, at the time of switching the characteristic from the state A to the state B, the driver can be prevented from a sense of incompatibility.

Next, as aforementioned, from the latter half of the state C to the state D, the characteristic for the operation amount of the accelerator is switched from the characteristic which is not sensitive to the operation amount of the accelerator to the general characteristic. With respect to the timing, it is desirable that when the clutch stroke is detected, the time when the clutch stroke reaches the point C shown in Fig. 9, that is, the point C on the side of predetermined stroke engagement is switching timing.

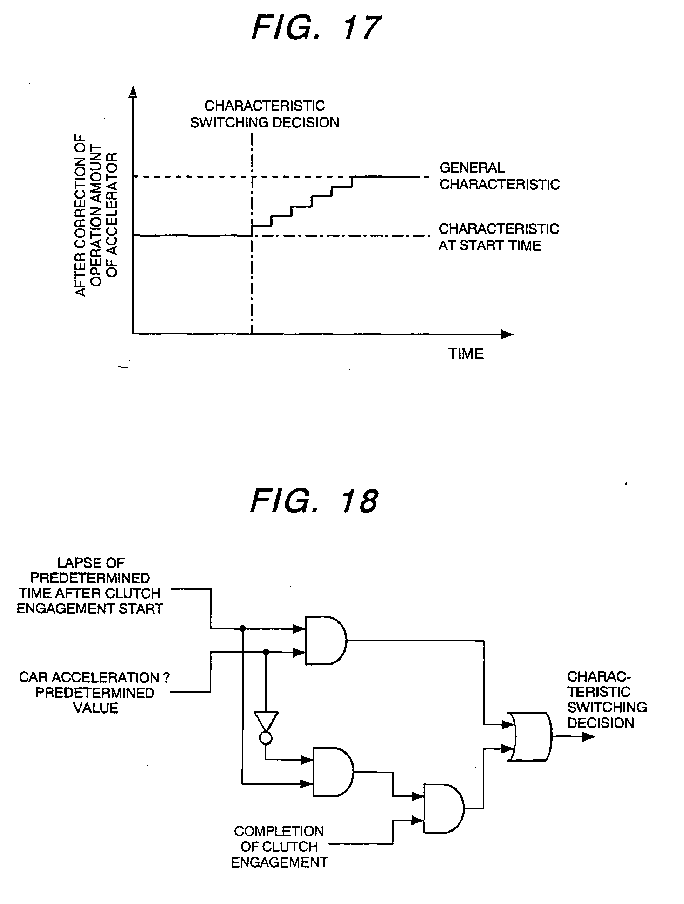

An example of the aforementioned method for executing the characteristic switching decision when the clutch stroke is not detected will be explained below by referring to Fig. 18. The switching timing is desirably decided by the time and car acceleration with the clutch engagement start detection as starting point. From the viewpoint of the general operation pattern of a driver and the detection sensitivity of clutch engagement start, during a predetermine time that a fine accelerator operation is required from the clutch engagement start, the aforementioned characteristic switching operation is not performed. When the detection sensitivity to clutch engagement start is not high and the clutch engagement start is to be detected at the timing that the clutch is engaged to a certain extent, the aforementioned predetermined time may be set to 0.

Next, that the clutch is engaged to a certain extent can be also decided from that the car acceleration exceeds a predetermined value. The car acceleration can be obtained by calculating an increase in a predetermined time at the car speed. Therefore, the aforementioned characteristic switching decision is executed when a predetermined time elapses from the clutch engagement start and the car speed exceeds a predetermined value.

Further, a case that although a car is on an upward slope and the clutch is engaged to a certain extent, the car acceleration does not reach a predetermined value or higher can be considered. In such a case, as explained in Fig. 10, the aforementioned characteristic switching decision is desirably executed from the aforementioned clutch engagement completion decision.

By the method explained above, the timing of switching, from the latter half of the state C to the state D, the characteristic for the operation amount of the accelerator from the characteristic which is not sensitive to the operation amount of the accelerator to the general characteristic can be judged. Further, with respect to the characteristic switching, as explained in the switching method from the state A to the state B, the switching is preferably executed so as to prevent the driver from a sense of incompatibility. Therefore, as shown in Fig. 17, the characteristic is preferably moved from the characteristic at the start time to the general characteristic, that is, slowly between the two characteristics. Also, similarly to Fig. 15, the characteristic changing amount from the movement source, that is, the characteristic at the start time to the movement destination, that is, the general characteristic is restricted to less than a predetermined value. Further, as described previously, the loading average may be used.

With respect to the correction explained above, an example to be executed for the operation amount of the accelerator is indicated. However, as an intermediate parameter led from the operation amount of the accelerator, for example, when the target torque is to be operated, it may be calculated on the torque level and in this case, the engine output can be adjusted more accurately. On the other hand, it is necessary to take care not to give a sense of incompatibility for the operation amount of the accelerator of the driver by the generation amount of engine output.

Further, in the above explanation, for the state movement decision, the car speed and the number of revolutions of the engine are used as input of the control process. However, when the device inputting them fails, the originally intended operation is not performed. Therefore, in such a case, it is desirable that the aforementioned control process is interrupted and the operation amount of the throttle for the operation amount of the accelerator is fixed. The degree of a failure in this control state may be properly selected from the frequency and fatal degree thereof.

Further, in the above description, in the spark ignition type gasoline engine, where the throttle valve is operated as a means for adjusting output of the engine is explained. Also in the other engines, for example, in a compression ignition type diesel engine, when the operation is for the same request, if the fuel injection amount is operated as a means for adjusting the engine output, the present invention can be applied similarly. Furthermore, even if the car power source is a motor, when there are an adjustment means for the output of the car power source operated by a driver and a means for adjusting the actual output of the car power source on the basis of the operation amount of the adjustment means available, the present invention can be applied to it.

Furthermore, in the above description, it is explained when the driver operates the clutch. However, the present invention can be applied also to a case that the clutch is automatically operated by a control unit other than a driver.

As understood by the above explanation, as an effect of the present invention, the present invention can realize both prevention of an occurrence of a sense of incompatibility to an engine output adjustment intention of a driver and execution of good start behavior according to the clutch state at the start time.

Reference signs in drawings show the following parts.

101: Air intake pipe, 102: Air cleaner, 103: Air flow sensor, 104: Throttle sensor, 105: Throttle body, 106: Collector, 107: Intra-cylinder internal combustion engine, 109: Fuel pump, 111: High-pressure fuel pump, 112: Injector, 113: Ignition coil, 114: Ignition plug, 115: Control unit, 116: Cam angle sensor, 117: Crank angle sensor, 118: Air-fuel ratio sensor, 201: I/O LSI, 203: MPU, 301: Engine, 302: Clutch, 303: Transmission, 304: Differential gear, 305: Wheel.

## Claims

1. A car start control apparatus comprising:
an operation mechanism for adjusting engine output by a driver;
an engine (301) for generating power for driving a car;
means for adjusting said engine output on the basis of an operation state of said operation mechanism;
transfer means for transferring said engine output to a drive system; and
a clutch (302) for continuing said power transfer of said transfer means, wherein a characteristic according to said operation state of said operation mechanism which is means for adjusting said engine output in a state relating to start when said car begins to move is made different from those in other states not relating to said start of said car.

2. A car start control apparatus according to Claim 1, wherein in said characteristic according to said operation state of said operation mechanism which is means for adjusting said engine output relating to said start when said car begins to move, said engine output according to an operation amount of said operation mechanism is made smaller than those in other states not relating to said start of said car.

3. A car start control apparatus according to Claim 1 or 2, wherein between said state relating to said start when engagement start and engagement end of said clutch (302) are detected and said car begins to move and in-engagement of said clutch, said characteristic according to said operation state of said operation mechanism which is means for adjusting said engine output is made different from those in other states not relating to said start of said car.

4. A car start control apparatus according to at least one of Claims 1 to 3, wherein between said state relating to said start when engagement start and engagement end of said clutch (302) are detected and said car begins to move and engagement end of said clutch (302), said characteristic according to said operation state of said operation mechanism which is means for adjusting said engine output is made different from those in other states not relating to said start of said car.

5. A car start control apparatus according to at least one of Claims 1 to 4, wherein a characteristic according to said operation state of said operation mechanism which is means for adjusting said engine output relating to start of said car when said car begins to move, when a state different from a state not relating to said start of said car is moved to a state not relating to said start of said car, is slowly moved to said different engine output.

6. A car start control apparatus according to at least one of Claims 1 to 5, wherein when said operation state of said operation mechanism requires all outputs of said engine (301), by said means for adjusting said engine output, said engine (301) is controlled so as to output all said outputs.

7. A car start control apparatus according to at least one of Claims 1 to 6, wherein when it is detected that means for generating any of input signals necessary for control fails, said control stated in Claim 1 is not executed.

8. A car start control apparatus according to at least one of Claims 1 to 7, wherein said engagement start of said clutch (302) is detected by comparing the number of revolutions of said engine inferred from an output value and a load state of said engine (301) with the actual number of revolutions.

9. A car start control apparatus according to at least one of Claims 1 to 8, wherein said engagement start of said clutch (302) is detected by comparing the number of revolutions of said engine (301) inferred from an output value and a load state of said engine (301) with the actual number of revolutions.

10. A car start control apparatus according to at least one of Claims 1 to 9, wherein said engagement end of said clutch (302) is detected by comparing a ratio of the number of revolutions of said engine (301) to the speed of said car with a shifting ratio of a driving system.

11. A car start control apparatus according to at least one of Claims 1 to 10, wherein said engagement end of said clutch (302) is detected by comparing a ratio of the number of revolutions of said engine (301) to the speed of said car with a shifting ratio of a driving system.

12. A car start control apparatus according to at least one of Claims 1 to 11, wherein between said engagement start and said engagement end of said clutch (302), when the number of revolutions of said engine (301) becomes smaller than a predetermined value, said engine output is increased.

13. A car start control apparatus according to at least one of Claims 1 to 12, wherein between said engagement start and said engagement end of said clutch (302), when the number of revolutions of said engine (301) becomes smaller than a predetermined value, said engine output is increased.

14. A car start control apparatus according to at least one of Claims 1 to 13, wherein said engine (301) is an internal combustion engine and said engine output adjusts and controls an air intake amount of said engine (301).

15. A car start control apparatus according to at least one of Claims 1 to 14, wherein said operation mechanism is an accelerator and said means for adjusting said engine output is a throttle.

16. A car start control apparatus according to at least one of Claims 1 to 15, wherein said means for adjusting said engine output is an electrically controlled throttle (105a) capable of freely setting a throttle opening for the accelerator opening.

17. A car start control apparatus according to at least one of Claims 1 to 16, wherein a state relating to said start of said car when said car begins to move is judged on the basis of the speed of said car and a signal of a neutral switch.

18. A car start control method comprising an operation mechanism for adjusting engine output by a driver, an engine (301) for generating power for driving a car, means for adjusting said engine output on the basis of an operation state of said operation mechanism, transfer means for transferring said engine output to a drive system, and a clutch (302) for continuing said power transfer of said transfer means, wherein in a state relating to start when said car begins to move, a characteristic according to said operation state of said operation mechanism which is means for adjusting said engine output is made different from that in said start state of said car.
